# EUROPÄISCHE PATENTSCHRIFT

(11) **EP 3 039 302 B1**
(45) Veröffentlichungstag und Bekanntmachung des Hinweises auf die Patenterteilung: **22.03.2017**
(21) Anmeldenummer: 15750647.8
(22) Anmeldetag: 24.07.2015
(51) Int. Cl.: F16B 7/18

(54) **PROFILSTAB SOWIE PROFILVERBINDUNG**
PROFILE BAR AND PROFILE CONNECTION
BARRE PROFILÉE ET ASSEMBLAGE DE PROFILÉS

(30) Priorität: 22.09.2014 DE 202014104524 U
(43) Veröffentlichungstag der Anmeldung: 06.07.2016
(60) Teilanmeldung: 16156144.4
(73) Patentinhaber: Flaig, Hartmut, D-78554 Aldingen (DE)
(72) Erfinder: Flaig, Hartmut, D-78554 Aldingen (DE)
(74) Vertreter: Wagner, Kilian
(86) Internationale Anmeldenummer: PCT/EP2015/067077
(87) Internationale Veröffentlichungsnummer: WO 2016/045822

(56) Entgegenhaltungen:
- DE-U1- 20 302 751
- DE-U1-202004 017 885

## Beschreibung

Die Erfindung betrifft einen langgestreckten Profilstab gemäß dem Oberbegriff des Anspruchs 1, insbesondere ein Strangpressprofil aus einer Leichtmetalllegierung, bevorzugt aus einer Aluminiumlegierung, mit mindestens einer sich in Richtung der Längserstreckung des Profilstabes erstreckenden, einen Nutboden aufweisenden, hinterschnittenen Längsnut, deren dem Nutboden in Richtung einer Längsnuthocherstreckung gegenüberliegende Längsnutöffnung senkrecht zur Längserstreckung der Längsnut (und senkrecht zur Längsnuthocherstreckung) von zwei über die Längsnutöffnung beabstandeten Hinterschnittabschnitten begrenzt ist, wobei eine senkrecht zur Längserstreckung der Längsnut (und senkrecht zur Längsnuthocherstreckung) gemessene Längsnutöffnungsbreite geringer ist als eine (in die gleiche Richtung gemessene) maximale Längsnutbreite in einem entlang der Längsnuthocherstreckung gesehen unterhalb der Hinterschnittabschnitte gelegenen Längsnutbereich. Ferner betrifft die Erfindung eine Profilverbindung gemäß Anspruch 6 mit mindestens einem solchen Profilstab.

Profilverbindungen, umfassend einen ersten und einen zweiten, jeweils langgestreckten Profilstab aus einer Leichtmetalllegierung, in der Regel eine Aluminiumlegierung, sind hinlänglich bekannt. Dabei kommen in der Regel Gewindehülsen mit Außengewinde zum Einsatz, die in einer hinterschnittenen Längsnut eines der Profilstäbe fixiert werden und in der Regel als Widerlage für einen Schraubkopf einer Verbinderschraube dienen, wobei die Verbinderschraube eine Durchgangsöffnung der Gewindehülse durchsetzt und mit einem Schraubengewinde (Außengewinde) mit einem Gegenlagerstück (Nutstein) verschraubt ist, wobei sich der Nutstein in der Regel in der hinterschnittenen Längsnut des orthogonal zur Längserstreckung der Verbinderschraube verlaufenden Profilstabes befindet.

Lediglich exemplarisch sei an dieser Stelle auf die EP 1 574 725 B1, die EP 0 458 069 B1 und die DE 20 2004 017 885 U1 verwiesen. Sämtliche Druckschriften zeigen unterschiedliche Ausführungsformen von Profilverbindungen.

Aus der DE 203 02 751 U1 ist ein gattungsgemäßer Profilstab bekannt.

Verbesserungswürdig bei sämtlichen Profilverbindungen ist deren Robustheit bzw. Festigkeit, insbesondere bei Kraftbeaufschlagung senkrecht zur Längserstreckung der zum Einsatz kommenden Verbinderschraube.

Ausgehend von dem vorgenannten Stand der Technik liegt der Erfindung die Aufgabe zugrunde, einen Profilstab anzugeben, der so ausgestaltet ist, dass eine mit diesem hergestellte Profilverbindung eine erhöhte Robustheit bzw. Festigkeit, insbesondere bei Kraftbeaufschlagung senkrecht zur Längserstreckung einer zum Einsatz kommenden Verbinderschraube aufweist. Ferner besteht die Aufgabe darin, eine entsprechend verbesserte Profilverbindung anzugeben.

Diese Aufgabe wird hinsichtlich des Profilstabes mit den Merkmalen des Anspruchs 1 sowie hinsichtlich der Profilverbindung mit den Merkmalen des Anspruchs 6 gelöst.

Vorteilhafte Ausgestaltungen der Erfindung sind in den Unteransprüchen angegeben. In den Rahmen der Erfindung fallen sämtliche Kombinationen aus zumindest zwei von in der Beschreibung, den Ansprüchen und/oder Figuren offenbarten Merkmalen. Zur Vermeidung von Wiederholungen sollen vorrichtungsgemäß offenbarte Merkmale, insbesondere im Hinblick auf eine mögliche spätere Patentanmeldung als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, den langgestreckten Profilstab, der bevorzugt als ein Strangpressprofil aus einer Leichtmetalllegierung, insbesondere aus einer Aluminiumlegierung ausgebildet ist, in einem Bereich bezogen auf die Längsnuthocherstreckung (gemessen von der Längsnutöffnung bis zum Nutboden) unterhalb des Nutbodens mit einem sich parallel zur Längsnut erstreckenden Längskanal zu versehen, wobei ein den Nutboden der hinterschnittenen Längsnut ausbildender, geschlossener, d.h. aus einem Profilstabvollmaterial ausgebildeter Profilabschnitt als Durchdringungsabschnitt ausgebildet ist, also nur eine so geringe Materialstärke aufweist, dass er mittels einer (nicht zum Profilstab gehörenden) Verbinderschraube, die die Längsnutöffnung der hinterschnittenen Längsnut durchsetzt, zum Herstellen eines Formschlusses mit dem Profilstab in Richtung der (senkrecht zur Nutbreite und senkrecht zur Längserstreckung der Längsnut orientierten) Längsnuthocherstreckung von dieser durchdringbar ist, insbesondere durch Verschrauben der Verbinderschraube in Richtung Längsnutboden bzw. Längsnutboden hindurch. Anders ausgedrückt befindet sich bei einem nach dem Konzept der Erfindung ausgebildeten Profilstab in einem Bereich unterhalb der Längsnut, d.h. weiter als der Längsnutboden von der die Längsnutöffnung aufweisenden Seitenfläche des Profilstabes beabstandet ein Längskanal, der ein Durchdringen bzw. Durchstoßen des den Längskanal von der Längsnut beabstandeten Durchdringungsabschnitts mittels einer Verbinderschraube ermöglicht, insbesondere wenn diese mit einen in der hinterschnittenen Längsnut befindlichen Nutstein (Widerlagerstück) zum Herstellen einer Profilverbindung verschraubt wird, wobei die Verbinderschraube bei diesem Verschrauben in Richtung des Nutbodens der Längsnut und durch diesen hindurch in das Durchdringungsabschnittmaterial (Profilstabvollmaterial) hinein verschraubt wird, wobei es ganz besonders bevorzugt ist, wenn der Durchdringungsabschnitt eine Materialstärke aufweist, die ein zumindest abschnittsweise Durchstanzen des dann bevorzugt als Stanzmembran ausgebildeten Durchdringungsabschnittes durch das vorgenannte Verdrehen der Verbinderschraube ermöglicht, also ein Herausbrechen von Durchdringungsabschnittsmaterial in die Längsnut hinein zur Herstellung einer Öffnung in dem Durchdringungsabschnitt, die die Verbinderschraube umschließt, sodass ein Formschluss zwischen der Verbinderschraube und dem Durchdringungsabschnitt resultiert, mit der Folge, dass verbessert senkrecht zur Längserstreckung der Verbindungsschraube orientierte Belastungen bzw. Kräfte aufgenommen werden können. Bevorzugt ist die Materialstärke des Durchdringungsabschnittes dabei so gewählt, dass eine Verbinderschraube durch Einbringen eines Drehmomentes von Hand, d.h. nicht mit einem automatisierten Werkzeug, ausreicht, um eine bis in die Längsnut hineinreichende Durchdringungsöffnung in den Durchdringungsabschnitt einbringen, insbesondere einstanzen, d.h. ausbrechen zu können. Ein mit einer nach dem Konzept der Erfindung ausgebildeten Profilstab hergestellte Profilverbindung zeichnet sich daher durch eine erhöhte Festigkeit und Robustheit aus.

Unter einem Durchdringen des Durchdringungsabschnittes wird dabei verstanden, dass mittels der Verbinderschraube eine sich bis in die Längsnut hinein erstreckende Öffnung in dem Durchdringungsabschnitt mittels der Verbinderschraube herstellbar ist, wobei bei einer fertigen Profilverbindung die Verbinderschraube in die so hergestellte Öffnung hineinragt, und diese ganz besonders bevorzugt bis in die Längsnut hinein durchsetzt. Bevorzugt wird dabei zunächst von der Verbinderschraube Profilstabmaterial in Richtung der Längsnuthocherstreckung in den Längskanal hineinverformt, wobei bei einem weiteren Verdrehen (Verschrauben) der Verbinderschraube, insbesondere der in einem in der Längsnut aufzunehmenden Nutstein, ein Lochbutzen bzw. Profilstabvollmaterial in einem Bereich unterhalb der Verbindungsschraube von dem restlichen Profilstabvollmaterial des Durchdringungsabschnittes abreißt bzw. losbricht (ausgestanzt wird).

Bei einer alternativen erfindungsgemäßen Ausführungsform des Profilstabes muss der als Vollmaterial ausgebildete Abschnitt nicht zwingend von der Verbindungsschraube durchdrungen werden oder durchdringbar sein - es reicht vielmehr aus, wenn der Nutboden von einem Einform-Abschnitt aus Profilstabvollmaterial gebildet wird bzw. der Längskanal von der Längsnut über ein aus Profilstabvollmaterial ausgebildeten Einform-Abschnitt beabstandet ist, in den zum Herstellen eines Formschlusses mit den Profilstab eine Verbinderschraube in Richtung der Längsnuthocherstreckung (H) einformbar ist, derart, dass das Profilstabvollmaterial des Einform-Abschnitts in den Längskanal verdrängbar (einbeulbar) ist. Im Gegensatz zu der zuvor beschriebenen Ausführungsvariante wird die Verbindungsschraube also nicht vollständig durch den Profilstabvollmaterialabschnitt zwischen der Längsnut und dem Längskanal durchdrungen, sondern lediglich in diesen eingeformt. Auch auf diese Weise ist ein Formschluss herstellbar, wobei im Gegensatz zur ersten Alternative von der Verbindungsschraube keine durchgehende Öffnung in dem vorgenannten Abschnitt gebildet wird, sondern (lediglich) eine geschlossene Vertiefung bzw. Eindellung in Richtung der Längsnuthocherstreckung.

Die Erfindung hat - unabhängig von der Realisierungsform mit Durchdringungs- und/oder Einform-Abschnitt auch den Vorteil, dass eine mit einem derartigen Profilstab hergestellte Profilverbindung auf einfache Weise durch Herausdrehen der mindestens einen Verbinderschraube wieder lösbar ist, wobei sich eine einmal gelöste Profilverbindung einfach wieder herstellen lässt, indem die Verbinderschraube wieder in die ursprüngliche Vertiefung oder Durchgangsöffnung im Abschnitt zwischen der Längsnut und dem Längskanal hinein verstellt wird. Ein erleichtertes Finden der Vertiefung oder Durchgangsöffnung ist, wie später noch erläutert werden wird, durch die Realisierung einer sich vorderseitig verjüngenden Verbinderschraube möglich - hierzu kann beispielsweise im vorderen Abschnitt der Verbinderschraube ein Konusabschnitt realisiert werden.

Besonders bevorzugt ist die Verbinderschraube dabei aus einem Metall ausgebildet, welches härter ist als das Metallmaterial des Profilstabes. Ganz besonders bevorzugt handelt es sich um eine Stahlschraube, die noch weiter bevorzugt durch Kaltfliespressen hergestellt ist. Gegebenenfalls kann die Verbinderschraube, beispielsweise durch einen Vergütungsschritt gehärtet sein.

Im Hinblick auf eine günstige Herstellbarkeit der im Rahmen der Profilverbindung zum Tragen kommenden Verbinderschraube ist es bevorzugt, wenn diese in einem vorderen Bereich aus Vollmaterial ausgebildet ist, also keine stirnseitige (vorderseitige) Vertiefung aufweist. Dabei kann ein vorderer Abschnitt eine Zylinderkontur aufweisen oder im Hinblick auf ein verbessertes bzw. vereinfachtes Wiederfinden einer bereits hergestellten Vertiefung oder Durchgangsöffnung einen Konusabschnitt, wobei durch den Konus gleichzeitig eine verbesserte Zentrierung sowie gegebenenfalls verbesserte Haftkräfte zur Verbesserung der hergestellten Profilverbindung gewährleistet wird. Denkbar sind auch alternative, später noch zu erläuternde Ausführungsformen der Verbinderschraube mit frontseitiger Vertiefung und Ringschneide.

Ganz besonders bevorzugt ist eine Ausführungsform des Profilstabes, bei der dieser nicht nur eine einzige Kombination aus hinterschnittener Längsnut und benachbart dazu angeordneten Längskanal aufweist, die über einen wie zuvor beschriebenen ausgebildeten Durchdringungsabschnitt von der Längsnut beabstandet ist, sondern wenn der Profilstab auf mindestens zwei Seiten eine derartige Kombination aufweist, ganz besonders bevorzugt an sämtlichen vier Seiten, wobei jeweils zwei Seiten, insbesondere Seitenflächen des Profilstabes rechtwinklig zueinander angeordnet sind. Besonders bevorzugt ist eine Ausführungsform des Profilstabes mit einer rechteckigen Kontur, wobei die Ecken des Rechteckes bevorzugt nicht spitz sondern gerundet ausgebildet sind. Besonders bevorzugt ist eine quadratische Querschnittskontur, insbesondere mit gerundeten Ecken.

In Weiterbildung der Erfindung ist mit Vorteil vorgesehen, dass der Durchdringungsabschnitt eine Materialstärke gemessen in Richtung der Längsnuthocherstreckung von weniger als 5mm aufweist, um möglichst leicht bzw. mit begrenztem Kraftaufwand eine Durchgangsöffnung in den Durchdringungsabschnitt durch Verdrehen der Verbinderschraube herstellen zu können. Ganz besonders vorteilhaft hat es sich erwiesen, wenn vorgenannte Materialstärke aus einem Wertebereich zwischen 0,3mm und 4mm, ganz besonders bevorzugt zwischen 0,5mm und 3mm gewählt ist. Optimal scheint eine Materialstärke zwischen 1 mm und 2mm, noch weiter bevorzugt zwischen 1,3mm und 1,8mm zu sein.

Besonders zweckmäßig ist eine Ausführungsform des Profilstabes, bei der der Profilstab einen Zentralkanal aufweist, d.h. einen bezogen auf die Stirnfläche des Profilstabes zentrisch angeordneten und sich in Richtung der Längserstreckung des Profilstabes erstreckenden Kanal, welcher beispielsweise gemäß einer bevorzugten Ausführungsform eine kreisrunde Querschnittskontur aufweist, wobei ebenso eine gezackte Ausführung, d.h. eine Ausführung mit in Umfangsrichtung nebeneinander und sich in radialer Richtung erstreckenden Einbuchtungen bzw. Vertiefungen möglich ist, ebenso wie eine Ausführungsform mit einer kreisringförmigen, bzw. nicht gezackten Hohlzylindermantelflächenkontur.

Im Hinblick auf die konkrete Ausgestaltung des Längskanals gibt es unterschiedliche Möglichkeiten. Bevorzugt ist eine in Richtung der Längsnuthocherstreckung gewählte Höhenerstreckung des Längskanals größer als die Höhenerstreckung "Materialstärke" des Durchdringungsabschnittes in diese Richtung, um eine Wegbewegung bzw. ein Entfernen eines, bevorzugt herausgestanzten bzw. herausgelösten, Vollmaterialabschnittes des Durchdringungsabschnittes zu ermöglichen, welcher bei der Herstellung einer Durchdringungsöffnung in dem Durchdringungsabschnitt mittels der Verbinderschraube resultiert. Auch für den Fall der Realisierung eines Einform-Abschnittes kann es vorteilhaft sein, die Höhenerstreckung des Längskanals größer auszubilden als die Höhenerstreckung "Materialstärke" des Einform-Abschnittes, um somit ein erleichtertes Einformen in den Einformabschnitt bzw. Eindellen des Einform-Abschnittes in den Längskanal hinein zu erleichtern.

Ganz besonders bevorzugt ist es, wenn der Längskanal eine rechteckige Querschnittskontur (mit Blick auf die Stirnseite) aufweist und/oder dass die Querschnittskontur des Längskanals eine geringere Erstreckung in Richtung der Längsnuthocherstreckung als senkrecht dazu aufweist. Bevorzugt ist die Breite des Längskanals größer als seine Höhenerstreckung, wobei die Längskanalbreite bevorzugt zumindest der Breite der Längsnutöffnung entspricht.

Die Erfindung führt auch auf eine Profilverbindung mit mindestens einem nach dem Konzept der Erfindung ausgebildeten Profilstab (erster Profilstab). Die Profilverbindung zeichnet sich gemäß einer ersten Alternative dadurch aus, dass in dem Durchdringungsabschnitt eine Öffnung vorgesehen ist, die eine Verbinderschraube umschließt, wobei bevorzugt die Verbinderschraube bis in den benachbarten Längskanal hineinragt. Die vorgenannte Öffnung bzw. Durchdringungsöffnung ist vorzugsweise mittels der Verbinderschraube hergestellt, wobei weiter bevorzugt die Öffnung zumindest teilweise mittels Stanzen, d.h. Herausbrechen eines Vollmaterialabschnittes durch Durchdringungsabschnittes hergestellt ist, insbesondere indem die Verbinderschraube in Richtung in den Durchdringungsabschnitt durch Verschrauben mit einem Nutstein voran getrieben ist. Im Bereich ihres hinteren Endes weist die Verbinderschraube bevorzugt einen Antrieb, beispielsweise einen Mehrkantantrieb, insbesondere einen Inbusantrieb, oder einen Torxantrieb auf.

Gemäß einer zweiten Alternative ist die Verbinderschraube lediglich in den dann als Einform-Abschnitt dienenden Abschnitt zwischen der Längsnut und dem Längskanal eingeformt, derart, dass Material in den Längskanal eingebeult wird. Mit anderen Worten ist mittels der Verbinderschraube in diesem Fall eine Delle bzw. Verbindung geschaffen, die als Formschlussverbindung dient.

Ganz allgemein ist es grundsätzlich auch möglich für den Fall der Ausbildung des Abschnittes zwischen der Längsnut und dem Längskanal als Durchdringungskanal diesen mittels der Verbinderschraube nicht zu durchdringen, sondern die Verbinderschraube nur derart in den Durchdringungsabschnitt einzuformen, dass ein Lochbutzen nicht ausgestanzt wird, sondern dass lediglich eine Vertiefung im Nutboden der Längsnut resultiert, wobei Durchdringungsabschnittsmaterial in den Längskanal eingedellt bzw. eingeformt ist. Es ist also nicht zwingend notwendig, den Durchdringungsabschnitt mittels der Verbindungsschraube zu durchdringen bzw. Material zur Herstellung einer Durchgangsöffnung auszubrechen bzw. auszustanzen - für eine einfachere Formschlussverbindung kann es ausreichend sein, den Durchdringungsabschnitt lediglich mittels der Verbinderschraube in der Art eines Einform-Abschnittes zu deformieren bzw. mittels der Verbinderschraube eine Vertiefung herzustellen, derart, dass Material des Durchdringungsabschnittes in den benachbarten Längskanal eingeformt bzw. eingedellt ist.

Ganz besonders bevorzugt ist eine Ausführungsform, bei der die Verbinderschraube mit ihrem Außengewinde mit einem in der Längsnut angeordneten Nutstein verschraubt ist, der von der Verbinderschraube in Richtung der Höhenerstreckung der Längsnut durchsetzt ist. Bevorzugt dient dieser Nutstein zur Fixierung einer Verbindung des ersten Profilstabes mit einem weiteren Bauteil, insbesondere einem zweiten, eine hinterschnittene Längsnut aufweisenden Profilstab, der noch weiter bevorzugt nach dem Konzept der Erfindung ausgebildet ist. Anstelle eines zweiten Profilstabes kann auch ein anderes Bauteil, z.B. ein Befestigungswinkel oder ein Scharniergelenk auf die beschriebene Art auf einen ersten Profilstab festgelegt sein bzw. werden. Zur Fixierung des weiteren Bauteils muss nicht zwingend eine von der Verbinderschraube zu durchsetzende Fixierhülse vorgesehen werden - das fixierende Bauteil selbst oder ein weiteres Bauteil kann, insbesondere für den Fall der Realisierung des an dem ersten Profilstabes festzulegenden Bauteils nicht als zweiter Profilstab, von dem zu fixierenden Bauteil gebildet werden. Mit anderen Worten kann sich ein Schraubenkopf der Verbinderschraube an den zu fixierenden Bauteilen mittelbar oder unmittelbar abstützen - eine Fixierhülse, wie diese zum Fixieren eines zweiten Profilstabes von Vorteil ist, muss nicht vorgesehen werden. Ganz besonders bevorzugt weist die Profilverbindung mehrere solcher Verbinderschrauben auf, die bei Bedarf jeweils mit einem eigenen Nutstein in der Längsnut des ersten Profilstabes verschraubt sein können, oder mit einem gemeinsamen Nutstein.

In Weiterbildung der Erfindung ist mit Vorteil vorgesehen, dass, ein hinsichtlich seiner Längserstreckung bevorzugt senkrecht zur Längserstreckung des ersten Profilstabes orientiertes Bauteil, insbesondere ein zweiter Profilstab mit dem ersten Profilstab verbunden ist, wobei die Verbinderschraube zweckmäßigerweise eine in einer hinterschnittenen Längsnut des zweiten Profilstabes angeordnete Fixierhülse durchsetzt, wobei es noch weiter bevorzugt ist, wenn die Verbinderschraube mit einem Schraubenkopf auf einer von dem ersten Profilstab abgewandten Stirnseite der Hülse aufliegt. Bei Bedarf kann das Bauteil mit dem ersten Profilstab über mehrere parallelen, mit einer gemeinsamen oder mit separaten Nutsteinen verschraubten Verbinderschraube verbunden sein, wobei bevorzugt seitliche Verbinder formschlüssig mit dem Durchdringungsabschnitt verbunden sind und diese bevorzugt bis in den Längskanal hinein durchsetzen. Wie erwähnt kann die Verbinderschraube auch nur in den Durchdringungsabschnitt oder alternativ in einen Einform-Abschnitt eingeformt sein, so, dass jedenfalls in dem Vollmaterialabschnitt zwischen der Längsnut und dem Längskanal eine Vertiefung entsteht und das Vollmaterial in den Längskanal hinein deformiert ist.

Als besonders zweckmäßig hat es sich erwiesen, wenn die Verbinderschraube, insbesondere im Bereich eines vorderen, d.h. endseitigen Endes einen Konusabschnitt zum Herstellen der Formschlussverbindung mit dem Durchdringungsabschnitt des ersten Profilstabes aufweist, wobei sich im Rahmen der Profilverbindung die Verbinderschraube mit dem Konusabschnitt am Umfangsrand einer, vorzugsweise mit der Verbinderschraube hergestellten Öffnung im Durchdringungsabschnitt abstützt. Als besonders vorteilhaft hat es sich im Hinblick auf die Realisierung einer besonders festen Verbindung erwiesen, wenn der Konusabschnitt als Morsekonus ausgebildet ist, insbesondere mit einem Konuswinkel (Winkel zwischen der Mantelfläche des Konus und der Längsmittelachse der Schraube von 1,26'). Insgesamt ist es vorteilhaft, wenn der vorgenannte Konuswinkel nicht mehr als 10° beträgt, ganz besonders bevorzugt ist ein Wertebereich zwischen 0,5° und 10° gewählt ist, ganz besonders bevorzugt zwischen 1° und 5°, noch weiter bevorzugt zwischen 1° und 3°. Dabei verjüngt sich der Konusabschnitt in Richtung des vorderen, d.h. in der Einschraubrichtung gelegenen Endes der Verbinderschraube. Hierdurch kann eine zusätzliche Hemmung gegen Herausdrehen der Verbinderschraube erzielt werden. Alternativ ist es auch denkbar anstelle eines Konusabschnitts einfach einen Zylinderabschnitt vorzusehen - ein Konusabschnitt ist zwar grundsätzlich im Hinblick auf das Wiederfinden einer bereits zuvor hergestellten Vertiefung oder Öffnung vorteilhaft - aus Kostengründen kann jedoch auch ein Zylinderabschnitt realisiert werden.

Besonders zweckmäßig ist es, wenn die Verbinderschraube an ihrem vorderen in der Eindrehrichtung gelegenen Ende eine ebene Stirnseite aufweist, d.h. nicht spitz zuläuft, wodurch besonders einfach ein gewünschter (nicht zwingender) Durchstanzeffekt erzielt werden kann. Alternativ weist die Verbinderschraube im Bereich ihres vorderen Endes eine, bevorzugt zylindrische Öffnung auf, die umfangsseitig begrenzt ist von, insbesondere ringförmigen, Einformmitteln zum erleichterten Einformen in den oder Durchdringen des Durchdringungsabschnittes. Ganz besonders bevorzugt sind die Einformmittel derart ausgebildet, dass diese sich in eine gewisse Tiefe beim Verschrauben der Verbinderschraube in den Durchdringungsabschnitt einformen, wobei es gemäß einer ersten Alternative möglich ist, dass die Einformmittel sich bei weiterem Verschrauben der Verbinderschraube bis zum Erreichen des Längskanals einformen und ein herausgelöstes Vollmaterial des Durchdringungsabschnittes in der Öffnung aufgenommen ist. Alternativ ist es realisierbar, dass zumindest ein unterer, d.h. weiter vom Längsnutboden beabstandeter Abschnitt des Durchdringungsabschnittes zur Herstellung der gewünschten Öffnung ausgestanzt ist bzw. wird. Dabei ist es besonders bevorzugt, jedoch nicht zwingend, dass die stirnseitige Öffnung in der Verbinderschraube eine geringere Tiefenerstreckung aufweist als die Materialstärke des Durchdringungsabschnittes gemessen in Richtung der Längsnuthocherstreckung.

Im Hinblick auf die Dimensionierung der Verbinderschraube ist es für den Fall der Realisierung des Abschnittes zwischen der Längsnut und dem Längskanal als Durchdringungsabschnitt von Vorteil, wenn die Länge eines Schraubenschaftes der Verbinderschraube, gemessen von der Unterkante eines Schraubenkopfes bis zum vorderen Ende gleich groß ist oder kleiner als der in Richtung der Hocherstreckung der Längsnut gemessene Abstand zwischen dem Kanalboden und einem Widerlager für den Schraubenkopf, welches bevorzugt von einem von dem ersten Profilstab abgewandten (oberen) Umfangsrand einer Fixierhülse gebildet ist, die bevorzugt in einem zweiten Profilstab aufgenommen ist.

Im Hinblick auf die konkrete Ausgestaltung der Einformmittel gibt es unterschiedliche Möglichkeiten. Bevorzugt sind die Einformmittel als Ringschneide ausgebildet, entweder mit einer geradlinig verlaufenden Schneidkante oder mit einer strukturierten, insbesondere gewellten oder gezahnten Schneidkante.

Für den Fall der Realisierung von Einformmitteln ist es bevorzugt, wenn deren umfangsgeschlossener Wandabschnitt außengewindefrei ausgebildet ist.

Um ein möglichst komfortables bzw. wenig kraftaufwändiges Einformen der Einformmittel in den Abschnitt zwischen Längsnut und Längskanal zu ermöglichen, ist weiterbildungsgemäß vorgesehen, dass der Einform-Abschnitt mit dem größten Teil seiner Axialerstreckung, insbesondere (auch) im Bereich des vorzugsweise vorgesehenen umfangsgeschlossenen Wandabschnitts einen geringeren Durchmesser aufweist, als das Außengewinde des Schaftes, wobei bevorzugt der Außendurchmesser des Einform-Abschnittes den Kerndurchmesser des Außengewindes entspricht.

Eine Erleichterung des Einformens kann zudem dadurch erreicht werden, dass ein radialer Querschnitt des Einformprofils sich in axialer Richtung nach vorne, insbesondere schneidenartig verjüngt, um somit die Flächenpressung im Bereich der Einformkante zu erhöhen. Bei Bedarf kann zumindest der vordere Bereich der Einformmittel gehärtet sein.

Grundsätzlich ist es möglich, dass die Verbinderschraube eine Stift- bzw. Madenform aufweist, d.h. schraubenkopffrei ist. In diesem Fall wird die Verbinderschraube, insbesondere im Rahmen einer Profilverbindung bevorzugt zusammen mit einer Kombination aus einer in einer hinterschnittenen Längsnut eines ersten Profilstabes aufgenommenen Nutstein sowie einer in dem orthogonal dazu angeordneten Profil verankerten Hülse, die dann bevorzugt als Innengewindehülse ausgebildet ist.

Unabhängig von der konkreten Ausgestaltung des vorderen Verbinderschraubenendes ist es bevorzugt, wenn dieses außengewindefrei ausgestaltet ist, wobei grundsätzlich auch eine Ausgestaltung mit Gewinde realisierbar erscheint.

Ganz besonders bevorzugt ist jedoch eine Ausführungsform, bei der die Verbinderschraube einen Schraubenkopf aufweist, mit dem sie sich auf einen Widerlager im Rahmen der Profilverbindung abstützen kann. Dieses Widerlager kann von einer in einem zweiten Profilstab festzulegenden, insbesondere in einer hinterschnittenen Längsnut des zweiten Profilstabes festzulegenden Fixierhülse gebildet sein.

Ganz besonders bevorzugt ist es, dass die Axialerstreckung der stirnseitigen Öffnung mindestens 3mm beträgt und insbesondere aus einem Wertebereich zwischen 3mm und 5mm gewählt ist. Ganz besonders bevorzugt beträgt die Axialerstreckung mindestens 5% der Gesamtaxialerstreckung der Verbinderschraube.

Insbesondere für den Fall, dass von einem zweiten Profilstab unterschiedliche Bauteile an dem ersten Profilstab festgelegt werden sollen, kann das Widerlager mittelbar oder unmittelbar von dem zu befestigenden Bauteil, beispielsweise einem Winkel oder einem Scharnier gebildet sein.

Die Erfindung führt auch auf ein, insbesondere im Rahmen einer möglichen späteren Patentanmeldung beanspruchbares Verfahren zum Herstellen einer nach dem Konzept der Erfindung ausgebildeten Profilverbindung, wobei das Verfahren durch folgende Schritte gekennzeichnet ist: Bereitstellen eines nach dem Konzept der Erfindung ausgebildeten Profilstabes sowie einer, vorzugsweise wie zuvor beschrieben ausgebildeten, Verbinderschraube; Verdrehen der Verbinderschraube und dadurch (aufgrund der Gewindesteigung des Verbinderschraubenaußengewindes) Vortreiben der Verbinderschraube in den Durchdringungsabschnitt hinein, wobei das Verschrauben der Verbinderschraube vorzugsweise in einem in der hinterschnittenen Längsnut des Profilstabes aufgenommenen Nutstein erfolgt, wobei durch das Verdrehen und Vortreiben der Schraube eine Öffnung für die Schraube in den Durchdringungsabschnitt geschaffen, insbesondere ausgestanzt wird, wobei die Öffnung bevorzugt als Durchgangsöffnung zum benachbarten Längskanal ausgebildet wird.

Gemäß einer Verfahrensvariante durchdringt die Verbinderschraube den Abschnitt (Einform-Abschnitt) zwischen der Längsnut und dem Längskanal nicht, sondern verformt lediglich Abschnittsvollmaterial in den Längskanal hinein bzw. bildet eine Vertiefung in den Abschnitt aus. Im Gegensatz zu der ersten Variante wird ein Lochbutzenmaterial nicht entfernt bzw. ausgestanzt, sondern bleibt mit dem benachbarten Profilstabvollmaterial des (Einform-)Abschnittes verbunden.

Zusätzlich oder alternativ zu einem zweiten Profilstab ist es möglich, ein hiervon unterschiedliches Bauteil mit dem ersten Profilstab zu verbinden, beispielsweise ein Scharnier oder einen Winkel. Dieser kann mit der Verbindungsschraube in der zuvor beschriebenen Art und Weise am ersten Profilstab festgelegt werden, wobei gemäß einer ersten Alternative die Verbindungsschraube den dann als Durchdringungsabschnitt ausgebildeten Abschnitt zwischen der Längsnut und dem Längskanal durchdringt und gemäß einer alternativen Ausführungsform sich lediglich dann als Einform-Abschnitt ausgebildeten bzw. als Einform-Abschnitt dienenden Abschnitt einformt und Material des Einform-Abschnitts in den Längskanalabschnitt hinein deformiert bzw. einbeult.

Besonders bevorzugt ist es, wenn über das zuvor beschriebene Verfahren ein zweiter, insbesondere nach dem Konzept der Erfindung ausgebildeter Profilstab mit dem ersten Profilstab verbunden wird, wobei in diesem Fall die Verbinderschraube bevorzugt eine in den zweiten Profilstab, genauer einer hinterschnittenen Längsnut des zweiten Profilstabes angeordnete bzw. fixierte Hülse durchsetzt und mit einem in der ersten Längsnut des ersten Profilstabes aufzunehmenden Nutstein in der zuvor beschriebenen Art und Weise verschraubt und dadurch mit dem vorderen Ende der Verbinderschraube eine Durchgangsöffnung in den Durchdringungsabschnitt zum Längskanal hergestellt wird, wobei es besonders zweckmäßig ist, wenn bei der fertig hergestellten Verbinderschraube die Verbinderschraube mit ihrem Außenumfang, insbesondere dem Außenumfang eines fakultativen Konusabschnittes randseitig abgestützt ist in der Öffnung des Durchdringungsabschnittes.

Weitere Vorteile, Merkmale und Einzelheiten der Erfindung ergeben sich aus den der nachfolgenden Beschreibung bevorzugten Ausführungsbeispielen sowie anhand der Zeichnungen.

Diese zeigen in:
- Fig. 1 und Fig. 2: zwei unterschiedliche, um 90° relativ zueinander verdrehte Ansichten einer Profilverbindung umfassend mindestens einem nach dem Konzept der Erfindung ausgebildeten Profilstab,
- Fig. 3 und Fig. 4: Detailansichten aus den Fig. 1 bzw. 2,
- Fig. 5: einen Stanzabfall, der aus der Herstellung von Durchgangsöffnungen im Durchdringungsabschnitt resultiert,
- Fig. 6: eine mögliche Ausgestaltung einer Verbinderschraube, und
- Fig. 7: eine stark schematisierte Darstellung eines Profilstabes in einer Längsschnittansicht (nur obere Hälfte), wobei hier der Abschnitt zwischen Längsnut und Längskanal als Einform-Abschnitt ausgebildet ist oder nur als Einform-Abschnitt genutzt wird - hier wird kein Vollmaterial des Abschnittes 7 von der Verbinderschraube ausgestanzt, sondern lediglich deformiert in den Längskanal 9 hinein.

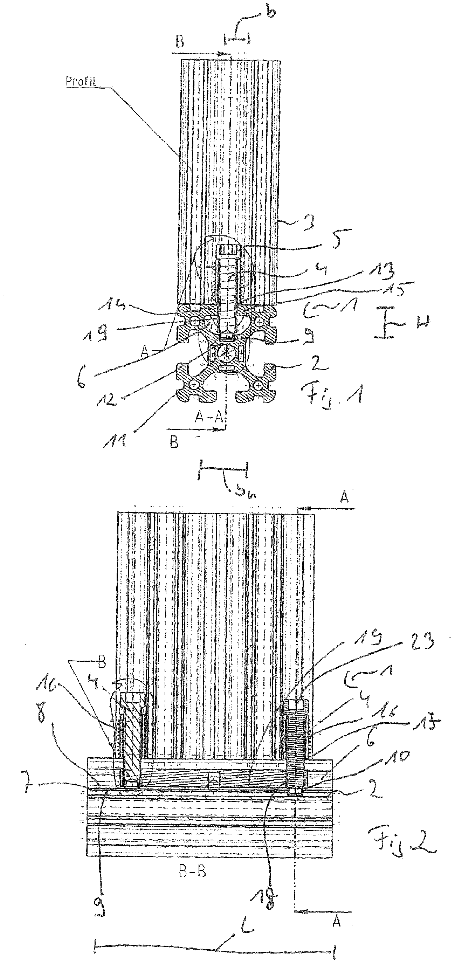

In den Fig. 1 und 2 ist eine Profilverbindung 1 gezeigt, umfassend einen langgestreckten (ersten) Profilstab 2, der in dem gezeigten Ausführungsbeispiel als Strangpressprofil aus einer Aluminiumlegierung ausgebildet ist. Ferner umfasst die Profilverbindung 1 ein Bauteil 3, welches ebenfalls als Profilstab 2 (zweiter Profilstab) ausgebildet ist, der senkrecht zum ersten Profilstab 2 orientiert ist.

Der Profilstab 2 und das Bauteil 3 sind aneinander fixiert mittels einer hier beispielhaft einen Schraubenkopf 5 aufweisenden Verbinderschraube 4.

Diese durchsetzt in Richtung der Hocherstreckung H einer hinterschnittenen Längsnut 6 einen später noch im Detail zu erläuternden Abschnitt 7, der zum einem einen Nutboden 8 der hinterschnittenen Längsnut 6 ausbildet sowie einen unterhalb der hinterschnittenen Längsnut 6 vorgesehenen Längskanal 9 von der hinterschnittenen Längsnut 6 beabstandet. Der Abschnitt 7 kann gemäß einer ersten Alternative als Durchdringungsabschnitt ausgebildet sein, der von einer Verbinderschraube durchdringbar, insbesondere durchstanzbar ist, um somit eine Durchgangsöffnung zwischen Längsnut und Längskanal zu schaffen. Bei nur vergleichsweise leichtem Anziehen der Verbinderschraube ist es möglich, den Durchdringungsabschnitt nicht zu durchstoßen bzw. durchsetzen, sondern lediglich derart einzuformen, sodass eine Vertiefung entsteht und Material des Abschnitts in den Längskanal eingedellt bzw. eingeformt wird. Auch ist es denkbar, nach einer alternativen Ausführungsform, den Abschnitt 7 von vorneherein nicht als Durchdringungsabschnitt auszulegen, sondern lediglich als Einform-Abschnitt, der das Einformen einer Verbinderschraube in Richtung der Hocherstreckung der Längsnut ermöglicht, derart, dass in dem Einform-Abschnitt eine Delle bzw. Vertiefung zur Realisierung des Formschlusses resultiert und Material des Einform-Abschnittes in den Längskanal eingeformt bzw. eingedellt wird.

Aus Fig. 2 rechts ist zu erkennen, dass eine Verbinderschraube 4 (die Profilverbindung 1 enthält hier beispielhaft zwei solcher Verbinderschrauben 4) eine mittels der Verbinderschraube 4 in den Durchdringungsabschnitt 7 eingebrachte Öffnung 10 durchsetzt und in den Längskanal 9 hineinragt. Seitlich stützt sich die Verbinderschraube 4 am Umfangsrand der Öffnung 10 ab, sodass senkrecht zur Längserstreckung des Bauteils 3 orientierte Kräfte optimal aufgenommen werden können.

Zu erkennen ist aus Fig. 1 ferner, dass der (erste) Profilstab 2, betrachtet in der Querschnittsansicht vier identische Seitenflächen aufweist, wobei die Querschnittskontur quadratisch ist. Jeder Seitenfläche ist jeweils eine identisch ausgebildete Kombination aus hinterschnittener Längsnut 6 und über einen hier beispielhaft als Durchdringungsabschnitt ausgebildeten Abschnitt 7 beabstandeten Längskanal 9 zugeordnet.

Aus Fig. 1 ist weiter zu erkennen, dass der Profilstab 2 einen Zentralkanal 11 aufweist, von dem der Längskanal 9 über einen Vollmaterialabschnitt 12 in Richtung der Höhenerstreckung H der hinterschnittenen Längsnut 6 beabstandet ist.

Eine Längsnutöffnung 13 der hinterschnittenen Längsnut wird begrenzt von zwei einander gegenüberliegenden Hinterschnitten 14, 15, die die Breite b der Längsnutöffnung 13 definieren. Eine maximale Längsnutbreite bₙ wird erreicht in einem Bereich unterhalb der Hinterschnitte 14, 15. Die maximale Längsnutbreite bₙ und die senkrecht dazu orientierte Längsnuthöhenerstreckung H sind senkrecht orientiert zur Längserstreckung L (vgl. Fig. 2 des langgestreckten Profilstabes 2).

Aus Fig. 2 ist zu erkennen, dass jede Verbinderschraube 4 eine Hülse 16 durchsetzt und sich mit ihrem Schraubenkopf 5 auf der dem ersten Profilstab 2 abgewandten Seite an der Hülse 16 abstützt. Die Hülse 16 ist beispielsweise mittels eines Außengewindes oder sonstiger, beispielsweise bajonettartiger Fixiermittel in einer hinterschnittenen Längsnut 6 des Bauteils 3 aufgenommen. Die Verbinderschraube 4 durchsetzt jeweils die senkrecht zur Längserstreckung L des Profilstabes 2 orientierte Hülse 16 und ist mit ihrem Außengewinde 17 mit dem Innengewinde 18 eines Nutsteins 19 (Widerlagerstück) verschraubt, der in der hinterschnittenen Längsnut 6 aufgenommen ist. Der Nutstein 19 wird im fertig montierten Zustand (vgl. Fig. 2 rechts) durchsetzt von der Verbinderschraube 4, die zudem in den Abschnitt 7 hineinragt und diesen bevorzugt, wie gezeigt, auch in den Längskanal 9 hinein durchsetzt.

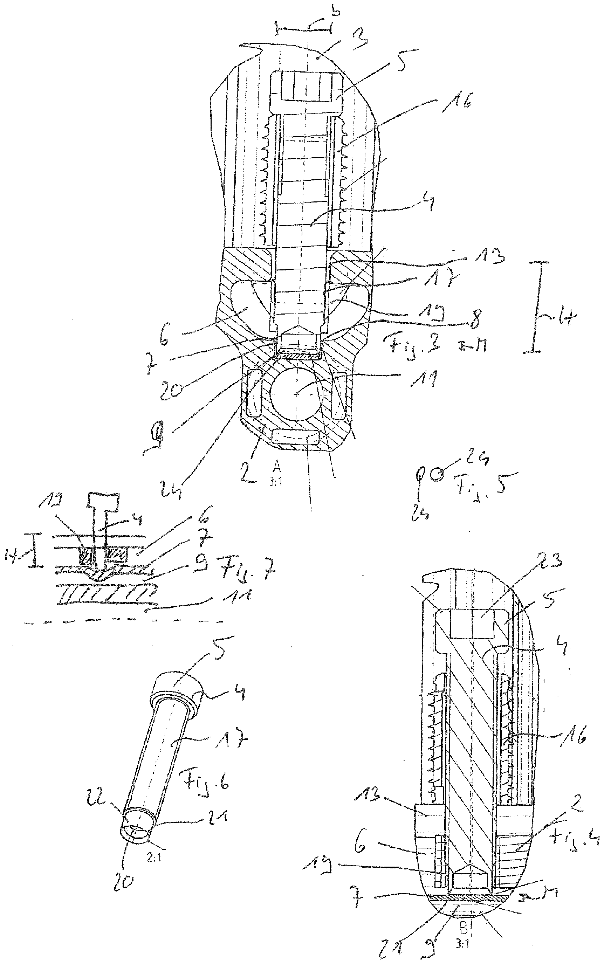

Eine mögliche Ausführungsform der Verbinderschraube 4 ist in Fig. 6 gezeigt. Diese umfasst fakultativ einen Schraubenkopf 5.

Lediglich beispielhaft ist gezeigt, dass in einem vorderen Ende eine Öffnung 20, hier eine Sacklochöffnung vorgesehen ist, die umgeben ist von Einformmitteln 21, hier in Form einer gleichmäßigen Ringschneide, die endseitig einer umfangsgeschlossenen Umfangswand 22 angeordnet ist. Bei einer alternativen Ausführungsform, die vereinfacht fertigbar ist, kann auch ein ebenes vorderes Ende, d.h. ein Ende ohne Öffnung 20 oder mit einer Öffnung 20 mit geringerer Axialerstreckung vorgesehen sein.

In Fig. 6 ist ein dem vorderen Ende gegenüberliegender bzw. von diesem abgewandter Antrieb 23 nicht gezeigt. Dieser ist beispielsweise in Fig. 2 zu erkennen.

Fig. 3 zeigt einen Ausschnitt einer fertigen Verbindung bzw. das Detail aus Fig. 1, welches der rechten Verbinderschraubenverbindung gemäß Fig. 2 entspricht.

Zu erkennen ist die Hülse 16 in der Längsnut 6 im Bauteil 3 (zweiter Profilstab). Diese Hülse 16 ist innengewindefrei ausgebildet. Der Schraubenkopf 5 der Verbinderschraube 4 stützt sich stirnseitig auf der Hülse 16 ab, wobei die Verbinderschraube 4 mit ihrem Außengewinde 17 mit einem Nutstein 19 in der hinterschnittenen Längsnut 6 verschraubt ist. Hierzu durchsetzt die Verbinderschraube 4 die Längsnutöffnung 13. Ferner durchsetzt die Verbinderschraube 4 den Nutstein 19 in Richtung der Hocherstreckung H der hinterschnittenen Längsnut 6 und durchsetzt eine mittels der Verbinderschraube 4 hergestellte Öffnung 20 im Abschnitt 7 bis in den Längskanal 9. Bevorzugt ist also der Abschnitt 7 als durchstanzbare Stanzmembran ausgebildet. Dieser weist in dem gezeigten Ausführungsbeispiel eine Materialstärke M von etwa 1,5mm auf.

Das aus der Einbringung der Öffnung 20 resultierende Abfallstück 24 (Lochbutzen) kann als Stanzabfall bezeichnet werden, da die Öffnung 20 in einem unteren Bereich der Öffnung durch Ausstanzen des Abfallstückes 24 hergestellt ist. Das Abfallstück 24 befindet sich innerhalb des Längskanals 9, in welchem die Verbinderschraube 4 hineinragt. Zu erkennen ist, dass der Abstand zwischen den Zentralkanal 11 und dem Längskanal 9 größer ist als die Materialstärke M des Durchdringungsabschnittes 7. Dies ist jedoch nicht zwingend. Die Breitenerstreckung des eine rechteckige Querschnittskontur aufweisenden Längskanals 9 entspricht näherungsweise der Breite b der Längsnutöffnung 13. Bei einer Ausführungsform mit als Einform-Abschnitt ausgebildetem Abschnitt 7 oder bei nicht fest angezogener Verbinderschraube bei der Realisierung eines Durchdringungsabschnittes anstelle eines Einform-Abschnittes resultiert kein Abfallstück (Lochbutzen) - vielmehr wird in diesem Fall, wie in Fig. 7 gezeigt, lediglich Abschnittmaterial (Vollmaterial) des Abschnittes 7 in den Längskanal 9 hinein deformiert bzw. gebeult.

Fig. 7 zeigt dabei in einer Längsschnittansicht eine obere Hälfte eines ersten Profilstabes, wobei stark schematisiert eine Verbinderschraube 4 gezeigt ist, die analog zu Fig. 3 in einem weiteren Bauteil, insbesondere einem zweiten Profilstab festgelegt sein kann. Die Verbinderschraube durchsetzt einen Nutstein 9 in der hinterschnittenen Längsnut 6. Die Verbinderschraube 4 dellt den Abschnitt 7 ein und zwar in Richtung der Hocherstreckung H der Längsnut 6 in den Längskanal 9 hinein.

Fig. 4 zeigt die Situation links in Fig. 2 in einem vergrößerten Detail. In Fig. 4 ist die Verbinderschraube 4 noch nicht endgültig montiert sondern liegt noch auf dem als Durchdringungsabschnitt ausgebildeten Abschnitt 7, welcher als durchstanzbare Stanzmembran ausgebildet ist, auf. Die Verbinderschraube 4 durchsetzt bereits eine in eine hinterschnittenen Längsnut 6 des Bauteils 3 (zweiter Profilstab) aufgenommene Hülse 16 in Richtung der Hocherstreckung H der hinterschnittenen Längsnut 6 des ersten Profilstabes 2 und ist im Inneren des hinterschnittenen Längskanals 6 mit dem Nutstein 19 verschraubt und durchsetzt diesen Bereich, sodass ein vorderes Ende der Verbinderschraube 4, welches hier beispielhaft mit Einformmitteln 21 (fakultativ) versehen ist an den Durchdringungsabschnitt 7 ansteht. Durch Verdrehen der Verbinderschraube 4 in Umfangsrichtung wird diese in Richtung der Längsnuthocherstreckung H vorgetrieben in das Vollmaterial des Durchdringungsabschnittes 7 hinein und derart, dass der in Fig. 5 dargestellte Stanzabfall resultiert, der dann in den benachbarten Längskanal 9 hineinfällt.

### Bezugszeichenliste

- 1: Profilverbindung
- 2: Profilstab
- 3: Bauteil
- 4: Verbinderschraube
- 5: Schraubenkopf
- 6: hinterschnittene Längsnut
- 7: Abschnitt
- 8: Nutboden
- 9: Längskanal
- 10: Öffnung
- 11: Zentralkanal
- 12: Vollmaterialabschnitt
- 13: Längsnutöffnung
- 14: Hinterschnitt
- 15: Hinterschnitt
- 16: Hülse
- 17: Außengewinde
- 18: Innengewinde
- 19: Nutstein
- 20: Öffnung (Durchdringungsabschnittsöffnung)
- 21: Einformmittel
- 22: Umfangswand
- 23: Antrieb der Verbinderschraube
- 24: Abfallstück
- H: Hocherstreckungsrichtung der hinterschnittenen Längsnut
- b: Längsnutöfifnungsbreite
- bₙ: maximale Längsnutbreite
- L: Längserstreckung der hinterschnittenen Längsnut
- M: Materialstärke des Durchdringungsabschnittes

## Patentansprüche

1. Profilstab (2), insbesondere Strangpressprofil aus einer Leichtmetalllegierung, bevorzugt aus einer Aluminiumlegierung, mit mindestens einer sich in Richtung der Längserstreckung (L) des Profilstabes (2) erstreckenden, einen Nutboden (8) aufweisenden, hinterschnittenen Längsnut (6), deren dem Nutboden (8) in Richtung einer Längsnuthocherstreckung (H) gegenüberliegende Längsnutöffnung (13) senkrecht zur Längserstreckung (L) der Längsnut (6) von zwei über die Längsnutöffnung (13) beabstandeten Hinterschnittabschnitten (14, 15) begrenzt ist, wobei eine senkrecht zur Längserstreckung (L) der Längsnut (6) gemessene Längsnutöffnungsbreite (b) geringer ist als eine maximale Längsnutbreite (bₙ) in einem entlang der Längsnuthocherstreckung (H) gesehen unterhalb der Hinterschnittabschnitte (14, 15) gelegenen Längsnutbereich,
**dadurch gekennzeichnet,**
**dass** unterhalb des Nutbodens (8) ein sich parallel zur Längsnut (6) erstreckender Längskanal (9) vorgesehen ist, der von einem den Nutboden (8) ausbildenden, als Durchdringungsabschnitt und/oder Einform-Abschnitt ausgebildeten Abschnitt (7) aus Profilstabvollmaterial von der Längsnut (6) beabstandet ist,
der zum Herstellen eines Formschlusses mit dem Profilstab (2) von einer Verbinderschraube (4) in Richtung der Längsnuthocherstreckung (H) durchdringbar, insbesondere durchstanzbar, ist, und/oder
in den zum Herstellen eines Formschlusses mit dem Profilstab (2) eine Verbinderschraube (4) in Richtung der Längsnuthocherstreckung (H) einformbar ist, derart, dass Profilstabvollmaterial des Einform-Abschnitts in den Längskanal (9) verdrängbar ist.

2. Profilstab nach Anspruch 1,
**dadurch gekennzeichnet,**
**dass** der, vorzugsweise als Stanzmembran ausgebildete, Abschnitt (7) eine Materialstärke gemessen in Richtung der Längsnuthocherstreckung (H) von weniger als 5mm, vorzugsweise aus einem Wertebereich zwischen 0,3mm und 4mm, bevorzugt zwischen 0,5mm und 3mm, ganz besonders bevorzugt zwischen 1mm und 2mm, noch weiter bevorzugt zwischen 1,3mm und 1,8mm aufweist.

3. Profilstab nach einem der Ansprüche 1 oder 2,
**dadurch gekennzeichnet,**
**dass** die Längsnut (6) in Richtung der Längsnuthocherstreckung (H), vorzugsweise über einen Vollmaterialabschnitt (12), beabstandet ist von einem sich in Richtung der Längserstreckung (L) des Profilstabes (2) erstreckenden Zentralkanal (11) des Profilstabes (2), wobei vorzugsweise die Materialstärke (M) des Abschnittes (7) gemessen in Richtung der Längsnuthocherstreckung (H) geringer ist als der Abstand zwischen dem Längskanal (9) und dem Zentralkanal (11), gemessen in Richtung der Längsnuthocherstreckung (H).

4. Profilstab nach einem der vorhergehenden Ansprüche,
**dadurch gekennzeichnet,**
**dass** der Längskanal (9) eine rechteckige Querschnittskontur und/oder dass die Querschnittskontur des Längskanals (9) eine geringere Erstreckung in Richtung der Längsnuthocherstreckung (H) als senkrecht aufweist.

5. Profilstab nach einem der vorhergehenden Ansprüche,
**dadurch gekennzeichnet,**
**dass** der Profilstab (2) vier Seitenflächen aufweist, wobei jeweils zwei benachbarte der Seitenflächen rechtwinklig zueinander angeordnet sind und dass an mindestens zwei, insbesondere an allen vier, Seitenflächen eine hinterschnittene Längsnut (6) mit zugeordnetem Längskanal (9) sowie zwischen Längsnut (6) und Längskanal (9) angeordnetem Abschnitt (7), bevorzugt in einer Ausgestaltung nach einem der vorhergehenden Ansprüche, vorgesehen ist.

6. Profilverbindung mit einem ersten Profilstab nach einem der vorhergehenden Ansprüche,
**dadurch gekennzeichnet,**
**dass** der Abschnitt (7) von einer, vorzugsweise ein Außengewinde (17) aufweisenden, Verbinderschraube (4) in Richtung der Höhenerstreckung (H) der zugehörigen hinterschnittenen Längsnut (6) durchdrungen, insbesondere durchstanzt, ist oder dass in dem Abschnitt (7) eine Verbindungsschraube (4) in Richtung der Hocherstreckung (H) der zugehörigen hinterschnittenen Längsnut (6) eingeformt ist, derart, dass Profilstabvolimaterial des Abschnittes (7) in den Längskanal hinein deformiert ist.

7. Profilverbindung nach Anspruch 6,
**dadurch gekennzeichnet,**
**dass** die Verbinderschraube (4) mit ihrem Außengewinde (17) mit einem in der Längsnut (6) angeordneten Nutstein (19) verschraubt ist, der von der Verbinderschraube (4) in Richtung der Höhenerstreckung (H) der Längsnut (6) durchsetzt ist.

8. Profiiverbindung nach einem der Ansprüche 6 oder 7,
**dadurch gekennzeichnet,**
**dass** mittels der Verbinderschraube (4) ein Bauteil (3), insbesondere ein eine hinterschnittene Längsnut (6) aufweisender zweiter Profilstab, bevorzugt rechtwinklig zum ersten Profilstab (2), oder ein Winkelbauteil oder ein Scharnierbauteil an dem ersten Profilstab (2) festgelegt ist.

9. Profilverbindung nach Anspruch 8,
**dadurch gekennzeichnet,**
**dass** die Verbinderschraube (4) eine in der Längsnut (6) des zweiten Profilstabes (2) fixierte Hülse (16) durchsetzend angeordnet ist.

10. Profilverbindung nach einem der Ansprüche 6 bis 9,
**dadurch gekennzeichnet,**
**dass** die Verbinderschraube (4) einen, vorzugsweise endseitigen, bevorzugt als Morsekonus ausgebildeten, Konusabschnitt, bevorzugt mit einem Konuswinkel zwischen der Längsmittelachse der Schraube und der Konusmantelfläche aus einem Wertebereich zwischen 0,5° und 10°, bevorzugt zwischen 1° und 5°, noch weiter bevorzugt zwischen 1° und 3° aufweist, zum seitlichen Abstützen an einem Umfangsrand einer, vorzugsweise mittels der Verbinderschraube (4), bevorzugt durch Ausstanzen, hergestellten Öffnung (20) oder Vertiefung im Abschnitt (7).

11. Profilverbindung nach einem der Ansprüche 6 bis 10,
**dadurch gekennzeichnet,**
**dass** die Verbinderschraube (4) an ihrem vorderen Ende eine ebene Stirnseite zum Einformen und/oder Durchdringen, insbesondere Durchstanzen, des Abschnittes (7) aufweist oder dass die Verbinderschraube (4) im Bereich ihres vorderen Endes eine stirnseitige, bevorzugt zylindrische, Öffnung (20) aufweist, die umfangsseitig begrenzt ist von, insbesondere ringförmigen Einformmitteln (21) zum erleichterten Einformen in den und/oder Durchdringen des Abschnittes (7).

12. Profilverbindung nach Anspruch 11,
**dadurch gekennzeichnet,**
**dass** die Einformmittel (21) als Ringschneide ausgebildet sind, vorzugsweise mit einer in einer in einer Ebene, vorzugsweise einer Radialebene bezogen auf die Längserstreckung (L) der Verbinderschraube (4), oder dass die Ringschneide ein Wellen- oder Sägezahnprofil aufweist.

## Claims

1. Profile bar (2), in particular an extruded profile made from a light metal alloy, preferably from an aluminum alloy, having at least one undercut longitudinal slot (6) which has a slot bottom (8) and extends in the direction of the longitudinal extent (L) of the profile bar (2), and the longitudinal slot opening (13) opposite to the slot bottom (8) in the direction of a longitudinal slot height (H) perpendicular to the longitudinal extent (L) of the longitudinal slot (6) of which is limited by two undercut sections (14, 15) spaced apart by the longitudinal slot opening (13), wherein a longitudinal slot opening width (b) measured perpendicular to the longitudinal extent (L) of the longitudinal slot (6) is less than a maximum longitudinal slot width (bₙ) in a longitudinal slot region located below the undercut sections (14, 15) viewed along the longitudinal slot height (H),
**characterized in that**
a longitudinal duct (9) extending parallel to the longitudinal slot (6) is provided under the slot bottom (8), which is spaced from the longitudinal slot (6) by a section (7) of profile bar solid material which forms the slot bottom (8) and is formed as a penetration section and/or molded section,
which is penetrable, in particular punchable, by a connector screw (4) in the direction of the longitudinal slot height (H) for establishing a form fit with the profile bar (2)
and/or
into which a connector screw (4) is moldable for establishing a form fit with the profile bar (2) in the direction of the longitudinal slot height (H) in such a way that profile bar solid material of the molded section is displaceable into the longitudinal duct (9).

2. Profile bar according to claim 1,
**characterized in that**
the section (7), preferably formed as punching membrane, has a material thickness measured in the direction of the longitudinal slot height (H) of less than 5 mm, preferably of a value range between 0.3 mm and 4 mm, preferably between 0.5 and 3 mm, particularly preferably between 1 mm and 2 mm, even further preferably between 1.3 mm and 1.8 mm.

3. Profile bar according to one of claims 1 or 2,
**characterized in that**
the longitudinal slot (6), in the direction of the longitudinal slot height (H), is spaced from a central duct (11) of the profile bar (2) extending in the direction of the longitudinal extent (L) of the profile bar (2), preferably by a solid material section (12), wherein preferably the material thickness (M) of the section (7) measured in the direction of the longitudinal slot height (H) is smaller than the distance between the longitudinal duct (9) and the central duct (11) measured in the direction of the longitudinal slot height (H).

4. Profile bar according to one of the preceding claims,
**characterized in that**
the longitudinal duct (9) has a rectangular cross-sectional contour and/or **in that** the cross-section contour of the longitudinal duct (9) has a smaller extent in the direction of the longitudinal slot height (H) than in a perpendicular direction.

5. Profile bar according to one of the preceding claims,
**characterized in that**
the profile bar (2) has four side surfaces, wherein in each case two neighboring side surfaces are arranged rectangularly relative to one another and **in that** an undercut longitudinal slot (6) with assigned longitudinal duct (9) is provided on at least two, in particular on all four, lateral surfaces as well as between the section (7) arranged between the longitudinal slot (6) and the longitudinal duct (9), preferably in a configuration according to one of the preceding claims.

6. Profile connection with a first profile bar according to one of the preceding claims,
**characterized in that**
the section (7) is penetrated, in particular punched through, in the direction of the longitudinal height (H) of the assigned undercut longitudinal slot (6) by a connector screw (4) that preferably has an external thread (17), or **in that** in the section (7) a connector screw (4) is molded in the direction of the longitudinal height (H) of the assigned undercut longitudinal slot (6) in such a way that profile bar solid material of the section (7) is deformed into the longitudinal duct.

7. Profile connection according to claim 6,
**characterized in that**
the connector screw (4) with its external thread (17) is screw-connected to a slot nut (19) arranged in the longitudinal slot (6), which slot nut is penetrated by the connector screw (4) in the direction of the longitudinal height (H) of the longitudinal slot (6).

8. Profile connection according to one of claims 6 or 7,
**characterized in that**
a component (3), in particular a second profile bar having an undercut longitudinal slot (6), preferably at a right angle to the first profile bar (2), or an angled component or a hinge component is secured to the first profile bar (2) by means of the connector screw (4).

9. Profile connection according to claim 8,
**characterized in that**
the connector screw (4) is arranged so as to penetrate a sleeve (16) fixed in the longitudinal slot (6) of the second profile bar (2).

10. Profile connection according to one of claims 6 to 9,
**characterized in that**
the connector screw (4) comprises a cone section which is preferably formed as a morse taper on the end side, preferably with a cone angle between the longitudinal central axis of the screw and the cone shell from a value range between 0.5° and 10°, preferably between 1° and 5°, even more preferably between 1° and 3°, for laterally supporting on a circumferential edge of an opening (20) which is preferably produced by the connector screw (4), preferably by punching, or a depression in the section (7).

11. Profile connection according to one of claims 6 to 10,
**characterized in that**
the connector screw (4) comprises a flat face side on the front end thereof for forming and/or penetrating, in particular punching, the section (7), or **in that** the connector screw (4) comprises a preferably cylindrical opening (20) in the region of the front end thereof, which is circumferentially limited by in particular annular forming means (21) for an easier forming in and/or penetration of the section (7).

12. Profile connection according to claim 11,
**characterized in that**
the forming means (21) is formed as an annular cutting edge, preferably with a in a plane, preferably a radial plane with respect to the longitudinal extent (L) of the connector screw (4), or **in that** the annular cutting edge has a wave profile or sawing tooth profile.

## Revendications

1. Barre profilée (2), notamment profilé extrudé réalisé à partir d'un alliage de métal léger, de façon préférée à partir d'un alliage d'aluminium, avec au moins une rainure longitudinale (6) s'étendant dans la direction de l'extension longitudinale (L) de la barre profilée (2), comportant un fond de rainure (8), découpée par l'arrière, dont l'ouverture de rainure longitudinale (13) opposée au fond de rainure (8) en direction d'une extension verticale de rainure longitudinale (H) est délimitée perpendiculairement à l'extension longitudinale (L) de la rainure longitudinale (6) par deux sections de détouré arrière (14, 15) écartées par-delà l'ouverture de rainure longitudinale (13), une largeur d'ouverture de rainure longitudinale (b) mesurée perpendiculairement à l'extension longitudinale (L) de la rainure longitudinale (6) étant davantage réduite qu'une largeur de rainure longitudinale (bₙ) maximale dans une région de rainure longitudinale placée le long de l'extension verticale de rainure longitudinale (H), vue en dessous des sections de détouré arrière (14, 15) ; **caractérisée en ce que** :
un canal longitudinal (9) s'étendant parallèlement à la rainure longitudinale (6) est prévu en dessous du fond de rainure (8), ce canal étant placé à une certaine distance d'une section (7) en matière pleine de barre profilée de la rainure longitudinale (6) formant le fond de rainure (8) et réalisé sous la forme d'une section traversante et/ou d'une section de formage ;
ledit canal pouvant être traversé, notamment poinçonné, pour fabriquer une complémentarité de formes avec la barre profilée (2) par une vis de jonction (4), en direction de l'extension verticale de rainure longitudinale (H) ; et/ou
dans lequel une vis de jonction (4) peut être formée en direction de l'extension verticale de rainure longitudinale (H) pour fabriquer une complémentarité de formes avec la barre profilée (2), de telle sorte que la matière pleine de barre profilée de la section de formage puisse être comprimée dans le canal longitudinal (9).

2. Barre profilée selon la revendication 1, **caractérisée en ce que** la section (7), réalisée de préférence sous la forme d'une membrane d'estampage, comporte une épaisseur de matière mesurée en direction de l'extension verticale de rainure longitudinale (H) inférieure à 5 mm, de préférence à partir d'une plage de valeurs comprise entre 0,3 mm et 4 mm, de façon préférée entre 0,5 mm et 3 mm, de façon tout particulièrement préférée entre 1 mm et 2 mm, de façon encore davantage préférée entre 1,3 mm et 1,8 mm.

3. Barre profilée selon l'une quelconque des revendications 1 ou 2, **caractérisée en ce que** la rainure longitudinale (6) est placée à distance en direction de l'extension verticale de rainure longitudinale (H), de préférence au-delà d'une section de matière pleine (12), par rapport à un canal central (11) de la barre profilée (2) s'étendant en direction de l'extension longitudinale (L) de la barre profilée (2), l'épaisseur de matière (M) de la section (7) mesurée en direction de l'extension verticale de rainure longitudinale (H) étant de préférence plus réduite que la distance entre le canal longitudinal (9) et le canal central (11), mesurée en direction de l'extension verticale de rainure longitudinale (H).

4. Barre profilée selon l'une quelconque des revendications précédentes, **caractérisée en ce que** le canal longitudinal (9) comporte un contour de section transversale rectangulaire et/ou que le contour de section transversale du canal longitudinal (9) présente une extension davantage réduite en direction de l'extension verticale de rainure longitudinale (H) que perpendiculairement à elle.

5. Barre profilée selon l'une quelconque des revendications précédentes, **caractérisée en ce que** la barre profilée (2) comporte quatre surfaces latérales, respectivement deux surfaces connexes des surfaces latérales étant disposées à angle droit l'une par rapport à l'autre et qu'une rainure longitudinale (6) découpée par l'arrière est prévue au niveau d'au moins deux, notamment l'ensemble des quatre surfaces latérales avec un canal longitudinal (9) associé ainsi qu'une section (7) disposée entre la rainure longitudinale (6) et le canal longitudinal (9), de façon préférée dans une configuration selon l'une quelconque des revendications précédentes.

6. Assemblage de profilés avec une première barre profilée selon l'une quelconque des revendications précédentes, **caractérisé en ce que** la section (7) est traversée, notamment poinçonnée, par une vis de jonction (4) comportant de préférence un filet extérieur (17) en direction de l'extension verticale (H) de la rainure longitudinale (6) découpée par l'arrière associée ou qu'une vis d'assemblage (4) est formée dans la section (7) en direction de l'extension verticale (H) de la rainure longitudinale (6) découpée par l'arrière associée, de telle sorte que la matière pleine de barre profilée de la section (7) soit déformée vers l'intérieur dans le canal longitudinal.

7. Assemblage de profilés selon la revendication 6, **caractérisé en ce que** la vis de jonction (4) est vissée avec son filet extérieur (17) avec une clavette rainurée (19) disposée dans la rainure longitudinale (6), celle-ci étant traversée par la vis de jonction (4) en direction de l'extension verticale (H) de la rainure longitudinale (6).

8. Assemblage de profilés selon l'une quelconque des revendications 6 ou 7, **caractérisé en ce qu'**un composant (3), notamment une deuxième barre profilée comportant une rainure longitudinale (6) découpée par l'arrière, de façon préférée à angle droit par rapport à la première barre profilée (2), ou un composant en angle ou un composant à charnière, est fixé de façon permanente à la première barre profilée (2) à l'aide de la vis de jonction (4).

9. Assemblage de profilés selon la revendication 8, **caractérisé en ce que** la vis de jonction (4) comporte une douille (16) fixée de façon traversante dans la rainure longitudinale (6) de la deuxième barre profilée (2).

10. Assemblage de profilés selon l'une quelconque des revendications 6 à 9, **caractérisé en ce que** la vis de jonction (4) comporte une section conique réalisée de préférence du côté d'extrémité, de façon préférée sous la forme d'un cône morse, de façon préférée avec un angle conique entre l'axe central longitudinal de la vis et la surface d'enveloppe du cône à partir d'une plage de valeurs comprise entre 0,5° et 10°, de façon préférée entre 1° et 5°, de façon encore davantage préférée entre 1° et 3°, pour l'appui latéral contre un bord périphérique d'une ouverture (20) ou d'un renfoncement dans la section (7) réalisé de préférence à l'aide de la vis de jonction (4), de façon préférée par découpe.

11. Assemblage de profilés selon l'une quelconque des revendications 6 à 10, **caractérisé en ce que** la vis de jonction (4) comporte au niveau de son extrémité avant un côté avant plan pour former et/ou traverser, notamment estamper, la section (7) ou que la vis de liaison (4) comporte dans la région de son extrémité avant une ouverture (20) de côté avant, de façon préférée cylindrique, délimitée du côté périphérique par des moyens de formage (21), notamment en forme d'anneau, pour effectuer un formage simplifié dans la et/ou les bagues traversantes de la section (7).

12. Assemblage de profilés selon la revendication 11, **caractérisé en ce que** les moyens de formage (21) sont réalisés sous la forme d'une lame annulaire, de préférence dans un plan, de préférence un plan radial par rapport à l'extension longitudinale (L) de la vis de jonction (4) ou que la lame annulaire comporte un profilé ondulé ou en dents de scie.
